# FASCICULE DE BREVET EUROPEEN

(11) **EP 1 413 940 B1**
(45) Date de publication et mention de la délivrance du brevet: **17.02.2010**
(21) Numéro de dépôt: 03292442.5
(22) Date de dépôt: 03.10.2003
(51) Int. Cl.: G05D 1/08

(54) **Dispositif de contrôle d'attitude d'un satellite géostationnaire**
Vorrichtung zur Lagesteuerung eines geostationären Satelliten
Geostationary satellite attitude control device

(30) Priorité: 21.10.2002 FR 0213052
(43) Date de publication de la demande: 28.04.2004
(73) Titulaire: Thales, 92200 Neuilly-sur-Seine (FR)
(72) Inventeur: Montfort, Eric, 06210 Mandelieu (FR); Salenc, Cédric, La palme d'Or, 06150 Cannes-La-Bocca (FR); Roser, Xavier, 06400 Cannes (FR); Gaudic, Loic, 06400 Cannes (FR)
(74) Mandataire: Esselin, Sophie

(56) Documents cités:
- EP-A- 0 394 897
- FR-A- 2 796 172
- FR-A- 2 819 597
- US-A- 4 567 564
- US-A- 5 944 761
- MARKLEY F L ET AL: "ATTITUDE CONTROL SYSTEM CONCEPTUAL DESIGN FOR GEOSTATIONARY OPERATIONAL ENVIRONMENTAL SATELLITE SPACECRAFT SERIES" JOURNAL OF GUIDANCE AND CONTROL AND DYNAMICS, AIAA. NEW YORK, US, vol. 18, no. 2, 1 mars 1995 (1995-03-01), pages 247-255, XP000531532 ISSN: 0731-5090

## Description

L'invention est relative à un dispositif de contrôle de l'attitude d'un satellite géostationnaire.

L'attitude des satellites doit être constamment contrôlée de façon, notamment, que les antennes gardent toujours une direction déterminée, cette direction étant en général, un pointage vers la terre.

Ainsi dans un satellite, on prévoit des senseurs qui détectent l'attitude du satellite. Le signal de sortie des senseurs est comparé à une attitude de consigne de façon à fournir un signal de commande des actionneurs pour corriger l'attitude du satellite, afin qu'elle corresponde à la consigne.

Pour ces actionneurs on prévoit habituellement des roues à réaction. Une roue à réaction est une toupie qui tourne à une vitesse élevée, par exemple de l'ordre de 3000 tours par minutes, et de forte inertie. Quand la toupie est accélérée, c'est-à-dire que sa vitesse de rotation est augmentée, un couple de réaction s'exerce sur le corps du satellite. Pour une commande selon une direction quelconque, il faut prévoir 3 roues tournant selon des axes formant une base libre, par exemple, selon des axes constituant un repère orthonormé.

L'invention résulte de la constatation que l'attitude des satellites géostationnaires munis d'appendices de grande inertie devient, à partir d'une certaine taille, difficilement contrôlable avec des roues à réaction.

En effet, une structure de grande dimension et rattachée au corps du satellite de manière forcément flexible va perturber l'attitude du satellite.

Le corps du satellite subit des couples, ou des forces perturbatrices telles que celles provoquées par l'activation des tuyères, qui se répercutent sur l'appendice en provoquant des mouvements à fréquences basses. Il en est ainsi des générateurs solaires qui oscillent librement avec des faibles amplitudes. Lorsque les fréquences propres des appendices sont particulièrement basses, leurs oscillations doivent alors être contrôlées. Les roues à réaction ne peuvent pas s'opposer à ces couples importants, d'autant qu'il faut également s'opposer au ballottement du carburant du système de propulsion. Pour parvenir à contrôler l'attitude de ce type de satellite, on a proposé de combiner les roues à réaction avec des tuyères d'un système de propulsion chimique. Mais l'utilisation des propulseurs crée des perturbations sur l'orbite et la précision de pointage obtenue n'est pas suffisante.

L'invention remédie à cet inconvénient. A cet effet, le dispositif de commande d'attitude d'un satellite géostationnaire conforme à l'invention est caractérisé en ce qu'il comprend un ensemble d'actionneurs gyroscopiques.

Les actionneurs gyroscopiques sont généralement proposés pour la correction d'attitude des satellites à orbite basse car ils permettent de générer un couple de valeur importante en un temps réduit, les missions demandées à ces satellites nécessitant de pouvoir effectuer des changements de pointage rapides.

on rappelle ici qu'un actionneur gyroscopique comporte également une toupie tournant à vitesse constante mais c'est la variation de la direction de l'axe de rotation de la toupie qui provoque un couple sur le satellite.

On prévoit plusieurs actionneurs gyroscopiques pour pouvoir créer un couple dans une direction déterminée. A cet effet on peut faire appel à quatre actionneurs gyroscopiques équipés de cardans mono-axe disposés selon une configuration pyramidale comme décrit dans le brevet français 2 796 172.

Les actionneurs gyroscopiques peuvent être utilisés pour maintenir le pointage fin du satellite vers la terre pendant les phases de correction d'orbite est/ouest et/ou nord/sud mais aussi pour d'autres modes tels que la phase de poussée d'apogée lors de la mise à poste. Ils améliorent aussi le contrôle des ballottements dus aux carburants tels que les ergols.

Dans une réalisation de système de contrôle d'attitude avec actionneurs gyroscopiques, la boucle de régulation fait appel à un correcteur dont la structure et dont les réglages sont basés sur la définition d'une bande passante de la boucle de régulation qui contient les fréquences les plus basses et les plus énergétiques des modes souples des appendices. Ainsi, ce correcteur permet de stabiliser le système en permettant aux actionneurs gyroscopiques de s'opposer aux couples d'oscillation des ailes des générateurs solaires ou des antennes.

Ainsi, l'invention concerne un dispositif de contrôle d'attitude d'un satellite du type géostationnaire selon la revendication 1 et suivantes.

L'invention concerne également un satellite comportant un tel dispositif de contrôle d'attitude.

Dans un mode particulier de réalisation du dispositif de l'invention, on prévoit une boucle de régulation de l'attitude avec un correcteur tel que la bande passante de cette boucle contienne les fréquences les plus basses et les plus énergétiques des modes souples des appendices. Cette boucle peut comporter un correcteur de type Proportionnel, Intégrale, Dérivée (PID) associé à un filtre d'atténuation ou un correcteur synthétisé par les méthodes avancées de commande des systèmes telles que les méthodes H∞ et LMI(Linear Matrix Inequality).

Une méthode est décrite, par exemple, dans les documents suivantes :
- J.C. Doyle, K. Glover, P.K. Khargonekar, B.A. Francis, "State-space solutions to standard H2 and Hinfini control problems", IEEE Trans. Autom. Control, AC34, n° 8, p. 831-846, 1989,
- P. Gahinet, P. Apkarian, "A Linear Matrix Inequality approach to Hinfinity control", Int. Journal of Robust and nonlinear Control, vol. 4, p. 421-448, 1994.

Une méthode LMI est décrite, par exemple, dans les documents suivants :
- S. Boyd, L. El Ghaoui, E. Feron, V. Balakrishnan, "Linear Matrix Inequalities in System and Control Theory", Studies in Appl. Math. SIAM, Vol. 15, 1994,
- S. Boyd, L. El Ghaoui, E. Feron, V. Balakrishnan, "Control System Analysis and Synthesis via LMIs", American Control Conference, p. 2147-2154, 1993.

Le document EP 0394897A1 au nom de la Demanderesse ou de l'une de ses filiales, décrit un procédé de mise à poste d'un satellite géostationnaire utilisant une roue d'inertie et un gyromètre. Ce document ne concerne pas le contrôle sur orbite d'un satellite, et n'enseigne pas l'utilisation des actionneurs gyroscopiques.

D'autres caractéristiques et avantages de l'invention apparaîtront avec la description de certains de ses modes de réalisation, celle-ci étant effectuée en se référant aux dessins ci-annexés sur lesquels :
la figure 1 est un schéma d'un satellite auquel s'applique l'invention,
la figure 2 est un schéma d'un actionneur gyroscopique connu en soi,
la figure 3 est un schéma d'un dispositif de commande d'attitude conforme à l'invention, et
les diagrammes des figures 4a, 4b et de la figure 5 illustrent un exemple de fonctionnement du dispositif conforme à l'invention.

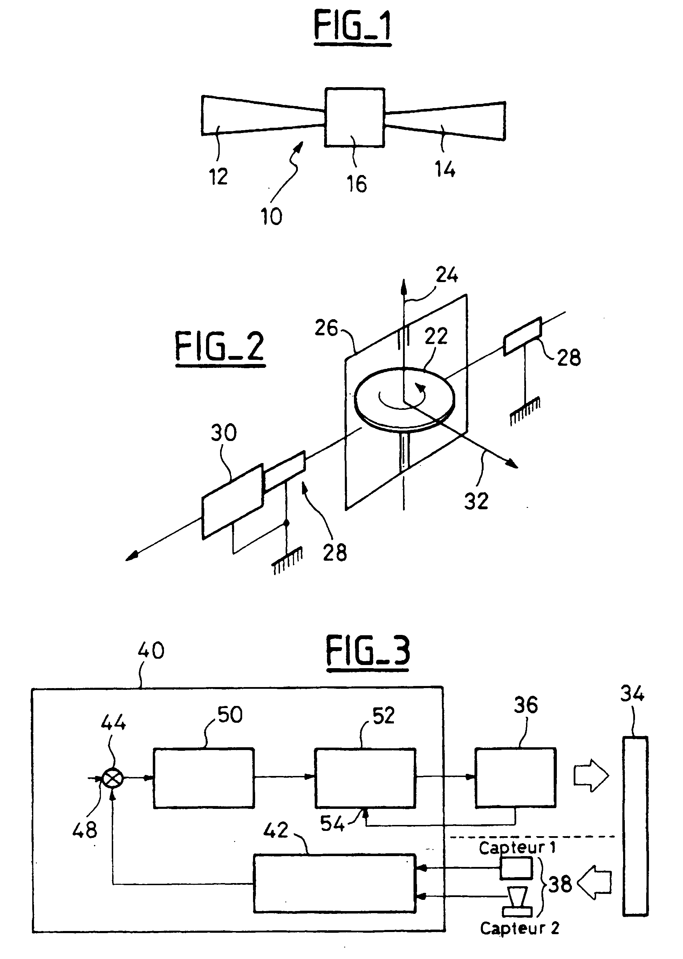

La figure 1 représente un satellite géostationnaire 10 équipé, pour son alimentation en énergie, de générateurs solaires 12 et 14 de grandes dimensions par rapport à celle de son corps 16. Quand un couple perturbateur est exercé sur le corps 16 du satellite, les ailes légères oscillent à basse fréquence, l'amplitude d'oscillation étant relativement faible. Ces types de déformations sont appelés des modes souples.

Le même problème d'oscillation se pose quand le satellite est doté d'antennes ou de toute autre structure de grandes dimensions, généralement déployables.

Pour s'opposer aux oscillations de ce type, l'invention prévoit de contrôler l'attitude du satellite à l'aide d'un ensemble d'actionneurs gyroscopiques permettant d'échanger rapidement le moment cinétique de cet ensemble avec le moment cinétique du satellite.

Un actionneur gyroscopique est représenté sur la figure 2. Il comprend une roue 22 tournant à vitesse constante autour d'un axe 24. Son mécanisme 26 de suspension et d'entraînement est monté sur un berceau a cardan 28 et un moteur électrique 30 est prévu pour permettre le basculement du mécanisme 26 et donc pour modifier l'orientation de l'axe de rotation 24.

Le couple de sortie 32 est le produit vectoriel de la vitesse de basculement du cardan par le moment cinétique de la toupie. Ce couple est perpendiculaire à l'axe de rotation du cardan et à l'axe de la roue. Il est donc tournant par rapport au satellite. Pour exercer le couple requis sur le satellite, on prévoit au moins trois actionneurs gyroscopiques, ce qui permet de délivrer plusieurs dizaines de Newton-mètres.

La figure 3 montre, de façon schématique, le système de contrôle d'attitude du satellite. Sur cette figure, l'ensemble du satellite, avec son corps 16 et ses "ailes" 12 et 14, est représenté par un rectangle allongé 34, et l'ensemble des actionneurs gyroscopique est représenté par un bloc 36. De façon en soi connue, des capteurs 38 permettent de détecter l'attitude du satellite. Les signaux fournis par ces capteurs 38 sont délivrés à une boucle de contrôle et régulation 40, en général réalisée sous forme de logiciel d'un processeur calculateur. Cette boucle 40 reçoit aussi des signaux de la part de l'ensemble des actionneurs gyroscopiques et fournit les signaux de commande aux actionneurs 36.

La boucle 40 comporte un bloc 42 de traitement des signaux fournis par les capteurs 38, afin de les mettre en forme pour qu'ils représentent l'attitude du satellite et le signal fourni par le bloc 42 est délivré à l'entrée d'un soustracteur 44 qui soustrait ces signaux d'attitudes mesurées d'un signal de consigne appliqué sur une autre entrée 48 de ce soustracteur 44. Le signal de sortie du soustracteur 44, qui représente le signal d'erreur, est appliqué à l'entrée d'un bloc correcteur 50 qui permet d'éviter les instabilités de la boucle de régulation et d'assurer les performances de pointage. De façon générale, le bloc correcteur est tel que la bande passante de la boucle de régulation contienne les fréquences les plus basses et les plus énergétiques des modes souples.

Ce bloc correcteur 50 peut comporter par exemple un correcteur PID (Proportionnel, Intégrale, Dérivée) et des filtres ou tout autre correcteur issu des méthodes avancées de commande des systèmes telles que les méthodes H∞ et LMI(Linear Matrix Inequality).

Le signal de sortie du bloc 50 est appliqué à l'ensemble 36 d'actionneurs gyroscopiques par l'intermédiaire d'un bloc 52 d'interface recevant aussi, sur une entrée 54, un signal de mesure de la position angulaire de chacun des cardans des actionneurs gyroscopiques.

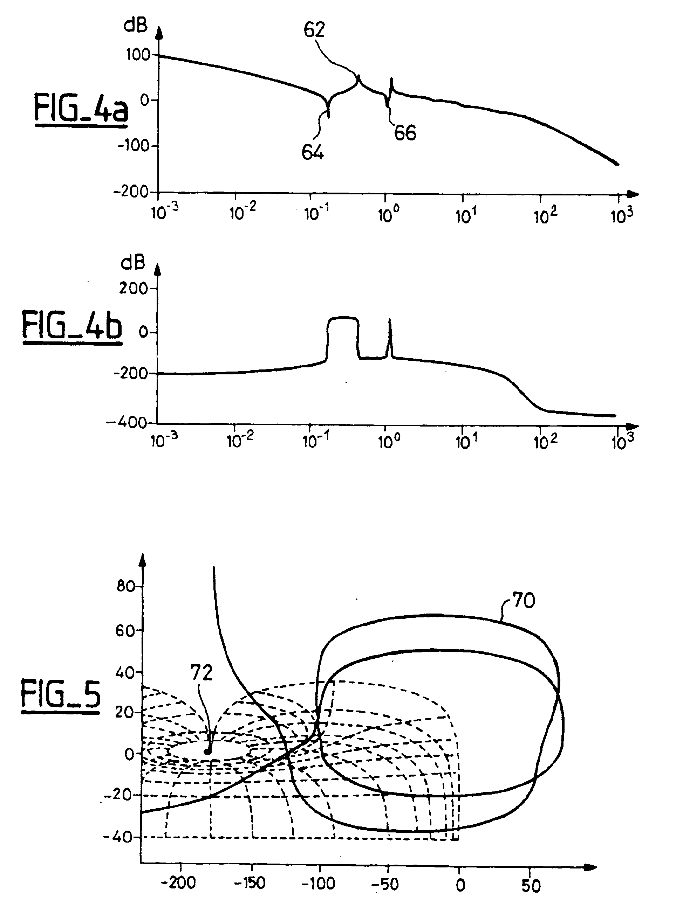

Les figures 4a et 4b montrent un exemple de diagrammes de Bode de l'ensemble de régulation.

Sur la figure 4a on a porté en abscisse la pulsation en radians par seconde et en ordonnée le gain en décibels. Sur la figure 4b on a porté en abscisse la pulsation, également en radians par seconde, et en ordonnée la phase en degrés.

On observe sur la figure 4a un pic de résonance 62 et des pics d'anti-résonance 64, 66 qui correspondent aux modes souples.

Sur le diagramme de la figure 5, on a représenté un diagramme de Black, ou Nichols, sur lequel les phases en degrés sont portées en abscisses, et les gains (en décibels) en boucle ouverte sont portés en ordonnées. La courbe 70 correspond à diverses valeurs du paramètre ω et les parties à droite du point critique 72 (gain 0db, phase 0) correspondent au mode souple.

Le système de contrôle conforme à l'invention permet une grande précision de guidage et donc une amélioration des performances de pointage.

## Revendications

1. Dispositif de contrôle d'attitude d'un satellite du type géostationnaire comportant des organes allongés (12, 14) dont des générateurs solaires et des antennes, ledit dispositif comportant en outre des actionneurs gyroscopiques pour fournir le couple nécessaire au maintien d'attitude du satellite soumis à des forces ou des couples perturbateurs, **caractérisé en ce qu'**il comporte une boucle de régulation (40) de l'attitude avec un correcteur (50) tel que la bande passante de cette boucle contienne les fréquences les plus basses et les plus énergétiques des modes souples desdits organes allongés.

2. Dispositif selon la revendication 1, **caractérisé en ce que** le correcteur de la boucle est de type Proportionnel, Intégrale, Dérivée (PID) et **en ce qu'**il est associé à un filtre d'atténuation.

3. Dispositif selon la revendication 1, **caractérisé en ce que** le correcteur de la boucle est synthétisé par les méthodes avancées de commande des systèmes telles que les méthodes Hoo et LMI(Linear Matrix Inequality).

4. Un satellite, comprenant des organes allongés et un système de contrôle d'attitude, selon l'une des revendications précédentes.

## Claims

1. Attitude control device for a geostationary satellite, comprising elongate members (12, 14) which include solar generators and antennas, said device further comprising gyroscopic actuators for supplying the torque necessary to maintain the attitude of the satellite when it is subjected to disruptive forces or torques, **characterised in that** it comprises an attitude regulation loop (40) with a corrector (50) such that the bandwidth of said loop contains the lowest and the most energetic frequencies of the flexible modes of said elongate members.

2. Device according to claim 1, **characterised in that** the corrector of the loop is of the Proportional, Integral, Derivative (PID) type and **in that** it is associated with an attenuation filter.

3. Device according to claim 1, **characterised in that** the corrector of the loop is synthesised by advanced system control methods such as the H∞ and LMI (Linear Matrix Inequality) methods.

4. Satellite comprising elongate members and an attitude control system, according to any one of the preceding claims.

## Patentansprüche

1. Vorrichtung zum Steuern der Lage eines Satelliten des geostationären Typs, der längliche Teile (12, 14) wie z.B. Solargeneratoren und Antennen umfasst, wobei die genannte Vorrichtung darüber hinaus gyroskopische Aktuatoren umfasst, um das Drehmoment zu erzeugen, das zum Halten der Lage des Störkräften oder -drehmomenten ausgesetzten Satelliten erforderlich ist, **dadurch gekennzeichnet, dass** sie eine Schleife (40) zum Regeln der Lage mit einem Kompensator (50) umfasst, so dass das Passband dieser Schleife die tiefsten und energiereichsten Frequenzen der flexiblen Moden der länglichen Teile beinhaltet.

2. Vorrichtung nach Anspruch 1, **dadurch gekennzeichnet, dass** der Kompensator der Schleife vom PID-(Proportional-Integral-Differential)-Typ ist, und dadurch, dass er mit einem Dämpfungsfilter assoziiert ist.

3. Vorrichtung nach Anspruch 1, **dadurch gekennzeichnet, dass** der Kompensator der Schleife mit fortschrittlichen Systemsteuermethoden wie den H∞ und LMI-(Linear Matrix Inequality)-Methoden synthetisiert wird.

4. Satellit, der längliche Teile und ein Lagesteuersystem nach einem der vorherigen Ansprüche umfasst.
